# EUROPÄISCHE PATENTSCHRIFT

(11) **EP 0 503 156 B1**
(45) Veröffentlichungstag und Bekanntmachung des Hinweises auf die Patenterteilung: **01.05.1996**
(21) Anmeldenummer: 91122050.7
(22) Anmeldetag: 21.12.1991
(51) Int. Cl.: C08J 9/28, C08J 9/12, C08L 33/00

(54) **Verfahren zur Herstellung eines wasserexpandierten Polyacrylatforkörpers**
Process of manufacture of a moulded polymer article based on a water expanded polyacrylic resin
Procedé du manufacture d'un article moulé en matière plastique à base de resine polyacrylique expansée à l'eau

(30) Priorität: 13.02.1991 DE 4104295
(43) Veröffentlichungstag der Anmeldung: 16.09.1992
(73) Patentinhaber: Schock & Co. GmbH, D-73614 Schorndorf (DE)
(72) Erfinder: Frank, Lothar, W-7067 Plüderhausen (DE)
(74) Vertreter: Hoeger, Stellrecht & Partner

(56) Entgegenhaltungen:
- BE-A- 643 164
- DE-A- 1 569 541
- FR-A- 2 254 583

## Beschreibung

Die Erfindung betrifft ein Verfahren zur Herstellung eines Kunststofformkörpers aus einem wasserexpandierten Polymerharz, wobei eine Mischung, welche einen mittels einer Emulgatorkomponente in einer harzbildenden Komponente emulgierten Wasseranteil umfaßt, ausgehärtet wird.

Der Typ der hier vorliegenden Polyreaktion ist grundlegend verschieden von der sogenannten Dispersionspolyreaktion, bei der die Mischung aus Wasser und harzbildender Komponente als Öl-in-Wasser-Emulsion vorliegt. Das Ergebnis einer solchen Polyreaktion ist eine feinteilige Polymermasse.

Bei dem Gegenstand der Erfindung liegt die aushärtbare Mischung als Wasser-in-Öl-Emulsion vor, und der Polyreaktionstyp ist der der Massenpolyreaktion (früher Blockpolyreaktion). Es entsteht deshalb als Reaktionsprodukt nicht eine Vielzahl von Polymerkügelchen, sondern ein durchgängiges, die Außenabmessungen des Formkörpers definierendes Polymergerüst.

Wasserexpandierte Polymerharze unterscheiden sich ferner grundsätzlich von Polymerharzschäumen, da kein Gas als Treibmittel verwendet wird, sondern es werden feinstverteilte Wassertröpfchen in Form einer Emulsion in die harzbildende Komponente eingebracht, wobei bei dem Aushärteprozeß die Wasseranteile in Tröpfchenform zunächst im Harz eingeschlossen bleiben. Durch einen nachfolgenden Trocknungsprozeß wird das Wasser aus dem Harzgerüst ausgetrieben, wobei eine schaumartige, jedoch von der Porenstruktur her sehr regelmäßige Harzstruktur übrig bleibt. Wasserexpandierte Polymerharze sind auf der Basis von Polyestermaterialien bekannt, und für diese Materialien wird berichtet, daß sie sich handhaben und bearbeiten lassen ähnlich wie Holz.

Die Ausgangsprodukte für Polyesterharze sind jedoch relativ teuer.

Andererseits ist aus der FR-A-2 254 583 bekannt, Methylmethacrylatmonomere als harzbildende Komponente bei der Herstellung der eingangs beschriebenen Formkörper zu verwenden. Problematisch bei diesem Herstellungsverfahren ist die deutliche Volumenabnahme beim Aushärten der Acrylatmonomere und die dabei auftretenden Schrumpfeffekte.

Aufgabe der vorliegenden Erfindung ist es, ausgehend von der FR-A-2 254 583 ein Verfahren zu schaffen, mit welchem Formkörper besserer Qualität herstellbar sind.

Diese Aufgabe wird erfindungsgemäß dadurch gelöst, daß die harzbildende Komponente der aushärtbaren Mischung einen Monomer-Anteil und ein PMMA-Präpolymer und gegebenenfalls einen Vernetzer auf Acrylat-Basis umfaßt und daß das Gewichtsverhältnis des Wasseranteils zur harzbildenden Komponente mindestens 1:1 beträgt, wobei das Präpolymer ein Molekulargewicht von ca. 40.000 bis 100.000 aufweist.

Aufgrund der günstigen chemischen Struktur lassen sich Polyester-Ausgangsprodukte leicht mit Wasser zu einer Emulsion verarbeiten, während dies aufgrund der andersartigen chemischen Struktur der Vorprodukte von Acrylat-Harzen nicht der Fall ist.

Andererseits ist Acrylat-Harz wesentlich wirtschaftlicher herzustellen und hat sich bei der Herstellung von Kunststofformkörpern insbesondere im Küchen- und Sanitärbereich, insbesondere auch wegen seinen für diese Anwendungszwecke ausgezeichneten Oberflächeneigenschaften, bewährt.

Die vorliegende Erfindung schafft erstmals die Möglichkeit, zufriedenstellende Kunststofformkörper aus einem wasserexpandierten Polymer-Harz auf Acrylat-Basis herzustellen.

Die aushärtbare Mischung kann erfindungsgemäß einen anorganischen partikelförmigen Füllstoff umfassen, was angesichts der Tatsache, daß normalerweise feinteilige Partikel einen Demulgiereffekt aufweisen, überrascht.

Die mittlere Korngröße des Füllstoffes kann in breitem Maße variiert werden, wobei vorzugsweise die mittlere Korngröße des Füllstoffs im Bereich von ca 50 µm bis 15 000 µm liegt.

Bei sehr feiner Korngröße des Füllstoffs, d.h. am unteren Ende des genannten Bereichs, wird eine homogene Struktur des Kunststofformkörpers erhalten, während bei Korngrößen am oberen Ende des genannten Korngrößenbereiches eine Struktur erhalten wird, die ähnlich den Kunststeinen ist. Allerdings ist durch die Verwendung von wasserexpandiertem Polymer-Harz eine Einsparung an Polymer möglich, weshalb sich diese Formkörperprodukte mit wesentlich verringerten Rohstoffkosten herstellen lassen. Ferner tritt durch die Einsparung an Polymer-Masse auch eine Gewichtsersparnis auf, die von einem Drittel bis zu 80 % betragen kann.

Im Falle, daß Füllstoffpartikel in der aushärtbaren Mischung vorhanden sind, ist der Gewichtseinsparungseffekt natürlich geringer. Dieser läßt sich wieder dadurch vergrößern, daß als Füllstoffpartikel, zumindest partiell, Hohlkörper wie z.B. geschäumte Glasperlen oder Keramik verwendet werden.

Als partikelförmige Füllstoffe werden Siliziumdioxide, wie z.B. Quarzmehl, Crystobalitmehl und ähnliches oder Aluminiumtrihydroxid, verwendet.

Die Wahl des Füllstoffes bewirkt die Härte im Oberflächenbereich des Formkörpers, weshalb der Füllstoff nach Anwendungszweck der Formkörper ausgewählt wird.

Bevorzugt wird der Monomeren-Anteil Methacrylat, Methylmethacrylat, Butylacrylat, Acrylnitril und/oder Styrol einzeln oder in einer Mischung umfassen.

Als vernetzende Substanzen werden bevorzugt solche mit mindestens zwei Acrylat-Gruppen verwendet, wobei sich insbesondere Triethylpropantrimethacrylat oder Ethylenglykoldimethacrylat empfehlen.

Der Vernetzer wird der aushärtbaren Mischung mit einem Anteil bis zu 10 Gew. % zugegeben. Damit erhält man eine ausreichende 3-dimensionale Vernetzung der Polymerstruktur, so daß insbesondere die wichtigen Eigenschaften wie Schraubfestigkeit des wasserexpandierten Polyacrylat-Harzes und die Druckfestigkeit, insbesondere im Rand- oder Stirnkantenbereich für die Anwendungszwecke im Küchen- und/oder Sanitärbereich, gegeben sind. Die Verschraubbarkeit ist deshalb besonders wichtig, weil dann in den Formkörper ähnlich wie in Holz Schrauben eingedreht werden können, so daß eine Montage, beispielsweise von Arbeitsplatten im Küchenmöbelbereich, ohne große Vorbereitungen möglich ist.

Dies erleichtert die Handhabung und Verwendung solcher Arbeitsplatten in großem Maße, da nicht nur Platten gegenüber den bisher üblichen Spanplatten ein wesentlich geringeres Gewicht aufweisen, was insbesondere bei den heute üblichen durchgehenden Arbeitsplatten, die mehrere Meter Länge haben können, von Bedeutung ist, sondern es ist auch eine bessere Verschraubbarkeit gegeben, so daß beispielsweise Schrauben in den Formkörper eingedreht werden können, ohne daß Löcher vorzubohren sind.

Da der harzbildenden Komponente Polyacrylat-Präpolymere (insbesondere PMMA) zugemischt sind, ist es möglich, ohne Vernetzer zu arbeiten. Die Präpolymeren werden mit einem Molekulargewicht im Bereich von ca. 40 000 bis 100 000 eingesetzt. Sehr vorteilhaft ist es, wenn die Präpolymere ein Molekulargewicht von ca. 70 000 besitzen.

Der Anteil der (PMMA-)Präpolymeren an der harzbildenden Komponente kann über einen großen Bereich variiert werden, beispielsweise bis zu 30 Gew. %. Üblicherweise werden Anteile von 10 bis 30 Gew. % gewählt, eine bevorzugte Mischung enthält ca. 20 Gew. %.

Bei der Polymerisation der Acrylate ist die Verfahrensführung während der Polymerisation extrem wichtig, da sich beim Aushärten eine deutliche Volumenabnahme ergibt. Um dieser Volumenabnahme entgegenzuwirken, wird bei der üblichen Verwendung von Acrylat-Gießharzen ein Präpolymeren-Anteil beigemischt, da die im Präpolymeren bereits gebildeten Bindungen proportional eine Verminderung des Schrumpfeffekts bewirken.

Da die Polyreaktion der Harze auf Acrylat-Basis exotherm verläuft, ist normalerweise eine sehr genaue Temperaturkontrolle notwendig, um zu verhindern, daß ein zu schnelles Reagieren einsetzt, was zu Spannungen in dem fertigen Formteil führt, da die Volumenabnahme durch Nachströmen von noch nicht ausgehärtetem harzbildendem Material verhindert wird.

Diese Probleme treten bei den wasserexpandierten Acrylat-Harzen weitaus weniger auf, da durch den Wasseranteil ein Moderator für die Reaktionsgeschwindigkeit des Aushärteprozesses quasi mit in das Polymer eingebaut wird. Die hohe Wärmekapazität von Wasser sorgt dafür, daß exzessive Energie durch die Wasseranteile gepuffert wird, und deshalb verläuft die Polyreaktion in der Regel im Bereich von 40 bis 50° C. Diese für Acrylatsysteme relativ niedrige Temperatur führt zu einer besonders schonenden Härtung, d.h. Materialspannungen treten aufgrund des verlangsamten Aushärteprozesses allenfalls in untergeordnetem Maße auf.

Der Schrumpfungseffekt wird ebenfalls durch den Wasseranteil stark vermindert, der ja volumenkonstant bleibt und Polymermaterial ersetzt.

Die Zugabe von PMMA-Präpolymeren wirkt zwar dem Resteffekt auch bei dem wasserexpandierten Acrylatsystem entgegen. Im vorliegenden Fall hat jedoch die Zugabe der PMMA-Präpolymeren in erster Linie den Grund, daß hierüber die Viskosität der harzbildenden Komponente und der aushärtenden Mischung insgesamt so beeinflußt werden kann, daß eine optimale Viskosität für das Gießverfahren erhalten wird.

Mit größer werdendem Wasseranteil in der aushärtbaren Mischung steigt auch die Viskosität der Mischung insgesamt an. Bevorzugt wird deshalb das Gewichtsverhältnis des Wasseranteils zur harzbildenden Komponente in der aushärtbaren Mischung ein Verhältnis von ca. 4:1 nicht wesentlich übersteigen, wenn die aushärtbare Mischung für einen Gießprozeß verwendet werden soll.

Für die Qualität des erhaltenen wasserexpandierten Acrylharzproduktes ist die Emulgatorkomponente ein wichtiger Bestandteil.

Entscheidend bei der Auswahl der Emulgatorkomponente ist, daß diese den Wasseranteil in der aushärtbaren Mischung in feiner Tröpfchenform bei der Lagertemperatur (üblicherweise Raumtemperatur) und bei der Reaktionstemperatur stabil halten kann.

Als Auswahlregel für Emulgatorkomponenten kann gelten, daß Emulgatoren bzw. Emulgatormischungen, die in der Mischung von harzbildender Komponente und Wasser zu einem Viskositätsanstieg der Gesamtmischung führen, für die Zwecke der Erfindung geeignet sind. Wichtig ist, daß der Wasseranteil in sehr fein verteilter Form, d.h. in feiner Tröpfchenform, vorliegt, und die einzelnen Wassertröpfchen wirken ähnlich wie feinteilige Feststoffe viskositätserhöhend. Die Viskosität nimmt mit Zunahme des Wasseranteiles in der Gesamtmischung zu.

Vorzugsweise wird der Wasseranteil mit einem mittleren Tröpfchendurchmesser von max. 50 µm in der aushärtbaren Mischung vorhanden sein. Bevorzugt liegt der Tröpfchendurchmesser im Bereich von ca. 20 bis 30 µm.

Der Mengenanteil der Emulgatorkomponente in der aushärtbaren Mischung hängt vom Wassergehalt ab, der in der aushärtbaren Mischung emulgiert bleiben soll. Es hat sich herausgestellt, daß üblicherweise 0,5 bis 6 Gew. % an Emulgator ausreichend sind.

Die Emulgatorkomponente sollte so formuliert sein, daß die Emulsion der aushärtbaren Mischung eine wesentlich höhere Viskosität aufweist als die harzbildende Komponente. Dies ist ein Anzeichen dafür, daß der Wasseranteil in ausreichend fein verteilter Form vorliegt. Ein üblicherweise beobachteter Viskositätsanstieg für die Emulgatoren, die zur Herstellung des erfindungsgemäßen Formkörpers verwendet werden können, liegt im Falle, daß das Verhältnis von Wasser zu harzbildender Komponente 2:1 beträgt, mindestens beim 20fachen. Im Falle, daß PMMA-Präpolymere in der harzbildenden Komponente vorhanden sind, ergibt sich ein wesentlich dramatischerer Viskositätsanstieg, der beispielsweise 2 000fach sein kann.

Im Falle, daß der Wasseranteil im Verhältnis zur harzbildenden Komponente ca. 4:1 beträgt, erhält man bei harzbildenden Komponenten ohne Präpolymer einen Viskositätsanstieg um den Faktor 300, während im Falle, daß ca. 10 % PMMA-Präpolymer in der harzbildenden Komponente vorhanden sind, beispielsweise ein Viskositätsanstieg um den Faktor 3 000 erfolgt.

Eine bevorzugte Emulgatorkomponente umfaßt ein oder mehrere Polyoxyethylen-Blockcopolymere, wie sie beispielsweise unter der Produktbezeichnung "Hypermer B 246" und "Hypermer 2296" im Handel erhältlich sind. Hypermer B 246 weist ein Molekulargewicht von ca. 5 000 auf und ist wachsartig fest. Hypermer 2296 ist ein flüssiges Copolymeres und weist eine Viskosität bei 25° C von ca. 1 000 bis 1 500 mPas auf. Die genannten Produkte werden von der Firma ICI Specialty Chemicals vertrieben. Bei den beiden genannten Emulgatorkomponenten hat sich als besonders vorteilhaft eine Mischung der Komponente "Hypermer B 246" zur Komponente "Hypermer 2296" im Verhältnis 1:2 als günstig erwiesen.

Ähnlich wirksam sind Emulgatorkomponenten, die sich als Mischester aus Glycerin, Fettsäuren und Sorbitanen zusammensetzen.

Ebenso können als Emulgatorkomponenten Sulfonate verwendet werden. In beiden Fällen muß vorher getestet werden, ob die Emulgatorkomponente den zuvor berichteten Viskositätsanstieg in der Mischung aus harzbildender Komponente und Wasseranteil erzeugen kann.

Im Falle der Verwendung eines optimalen Emulgatorsystemes bildet sich quasi eine sehr dünne Haut um die Wassertröpfchen durch den Emulgator und gegebenenfalls mit Anteilen aus der harzbildenden Komponente, die die Wassertröpfchen in der Emulsion stabilisieren.

Die aushärtbare Mischung enthält über die zuvor beschriebenen Bestandteile hinaus selbstverständlich einen Katalysator, beispielsweise auf Diacylperoxid-Basis, insbesondere Dibenzoylperoxid.

Ferner wird der Mischung ein Aktivator zugegeben, und hierbei haben sich beispielsweise Dimethylparatoluidin, verschiedene Amine oder auch t-Butylpermaleinat mit Schwefelverbindungen oder Aminen, wie z.B. Tetrahydro-1,4-oxazin, als günstig erwiesen.

Bei der Herstellung ist es möglich, zwei Mischungen zu bereiten, die im wesentlichen übereinstimmend sind, und bei denen die eine den Katalysator und die andere den Aktivator enthält. Beide Mischungen, die eine den Katalysator, die andere den Aktivator enthaltend, haben eine ausreichende Topfzeit für das übliche Handling der Mischungen und brauchen nur kurz vor dem Gießprozeß zusammengemischt und zusammen in die Gießform eindosiert werden.

Eine Entgasung der aushärtbaren Mischung ist möglich. Sie läßt die Eigenschaften der Emulsion im wesentlichen unverändert.

Zuvor wurde bereits beschrieben, daß den Emulsionen der aushärtbaren Mischung partikelförmige Feststoffe beigegeben werden können, die in der Mischung dann dispergiert vorliegen. Erstaunlicherweise wird durch die Feststoffzugabe, die in die fertige aushärtbare Mischung eingespeist werden kann, kein Demulgiereffekt erzielt. Dies bedeutet, daß bei einer guten Abstimmung der Emulgatorkomponente eine sehr stabile emulgierende Wirkung für die Wasseranteile erhalten wird.

Die aushärtbare Mischung wird insgesamt so ausgewählt, daß der Formkörper im wesentlichen geschlossene Poren nach der Aushärtereaktion und nach einem nachfolgenden Trocknungsschritt aufweist. Dies bedeutet, daß beim Aushärteprozeß zunächst die Wassertröpfchen in dem Polymergerüst eingeschlossen werden und daß im Trocknungsschritt das Wasser über Diffusion aus dem Formkörper auswandert.

Die Porengröße im Formkörper liegt bevorzugt im Mittel unterhalb 50 µm, kleinere Porengrößen sind jedoch bevorzugt.

Die zuvor beschriebenen erfindungsgemäß hergestellten Formkörper sind nun ideale Bauelemente zur Herstellung von zwei- oder mehrschichtigen Formkörpern mit einer Polymer-Deckschicht und einer Trägerschicht. Die Trägerschicht wird hierbei durch einen Formkörper aus wasserexpandiertem Polymerharz gebildet.

Durch das geringe spezifische Gewicht der erfindungsgemäßen Trägerschicht und der trotzdem vorhandenen großen Stabilität eignen sich diese zwei- oder mehrschichtigen Formkörper insbesondere zur Herstellung von Produkten, wie z.B. Arbeitsplatten oder ähnliche großflächige Teile im Küchen- und Sanitärbereich. Aufgrund der Stabilität der Trägerschicht, die durchaus mit Holz vergleichbar ist, lassen sich sehr große Teile realisieren, die auch bei großen Abmessungen noch eine ausreichende Tragfähigkeit aufweisen.

Unter Formkörpern werden nicht nur plattenförmige Materialien verstanden, sondern auch Teile wie z.B. Spülbecken, Badewannen, Duschtassen, Waschbecken oder auch Profilleisten u.ä.

Bevorzugt wird zunächst die Deckschicht in einer Gießform gebildet und danach die Trägerschicht aufgegossen.

Bei einer entsprechenden Auswahl der harzbildenden Komponente kann aber auch eine Trägerschicht erhalten werden, die mit einer Deckschicht verklebt werden kann. Voraussetzung ist hier selbstverständlich, daß die in Klebemitteln üblichen Lösemittel die Polymerstruktur des wasserexpandierten Polymer-Harzes nicht anlösen und angreifen.

Auch die Deckschicht des zwei- oder mehrschichtigen Formkörpers kann einen anorganischen, partikelförmigen Füllstoff umfassen. Im Gegensatz zu der Füllstoffgröße in der Trägerschicht ist hier ein Größenbereich für die Partikel bevorzugt, der bei 5 bis 50 µm liegt.

Normalerweise wird die Trägerschicht die mechanische Festigkeit und insbesondere auch die Tragfähigkeit des Formkörpers ausmachen, während die Deckschicht für den speziellen Einsatzzweck des Formkörpers die entsprechenden chemischen, mechanischen und sonstigen Eigenschaften aufweist, wie z.B. Fleckbeständigkeit, Wasserfestigkeit usw.

Aufgrund der geschlossenen Poren in der Trägerschicht ist die Platte völlig unempfindlich gegen Wassereinwirkung und auch Wasserdampfeinwirkung, da die geschlossenen Poren eine schnelle Wasseraufnahme durch das Trägerschichtmaterial verhindern.

Die Porenstruktur der Trägerschicht steht deshalb einem Anwendungszweck gerade im Küchen- oder Sanitärbereich nicht entgegen.

Übliche Schichtstärken sind für die Deckschicht ca. 2 bis 10 mm, während die Dicke der Trägerschicht häufig von 10 bis 60 mm gewählt wird. Aufgrund der leichten Bearbeitbarkeit der Trägerschicht lassen sich in die Trägerschicht beispielsweise nachträglich noch Schübe einbauen, z.B. in Form eines Messerfaches oder einer ausziehbaren Tischplatte.

In Fällen der besonders hohen Beanspruchung der erfindungsgemäßen mehrschichtigen Formkörper kann zwischen der Deckschicht und der Trägerschicht eine faserverstärkte Schicht angeordnet werden.

Selbstverständlich läßt sich die Trägerschicht nicht nur auf einer Oberseite, sondern auch auf der parallel dazu angeordneten mit einer weiteren Deckschicht versehen. Dies kann jedoch erst dann geschehen, wenn die Trägerschicht den Wasseranteil im Trocknungsverfahren verloren hat. Als Trocknungstemperaturen reichen hier in der Regel Temperaturen von 50 bis 100°C aus, teilweise sogar 40 bis 50° C. Die Trocknungszeit kann genau wie die Trocknungstemperatur durch Vakuumtrocknen erheblich reduziert werden.

In bestimmten Anwendungsfällen ist es vorteilhaft, wenn die Deckschicht transluzent ausgebildet ist, und in diesen Fällen wird dann unter der Deckschicht eine farbgebende Schicht angeordnet.

Damit läßt sich vermeiden, daß in die Deckschicht Pigmente eingebracht werden müssen, die in der Regel einen großen abrasiven Effekt aufweisen, da sich hier der Zusatz von harten anorganischen Partikeln, wie z.B. Titandioxid, kaum vermeiden läßt. Solche Partikel verursachen jedoch beispielsweise bei Arbeitsplatten den berüchtigten Schreibeffekt, d.h. wenn metallene Töpfe auf der Arbeitsfläche verschoben werden, bilden sich aufgrund der Abrasion von Metallpartikeln Spuren aus, die nur schwer wieder zu beseitigen sind.

Schließlich läßt sich in einfacher Weise an den Stirnseiten der Formkörper, d.h. an den Stirnseiten der Schichten des Formkörpers, eine Kunststoffleiste, beispielsweise aus Acrylat-Harz angießen, so daß sich insgesamt eine durchgehende Acrylat-Abdeckung der Trägerschicht ergeben kann. Vorzugsweise wird die Deckschicht selber häufig aus Acrylat-Harz, insbesondere PMMA, bestehen.

Im folgenden sei noch eine Beispielrezeptur für die erfindungsgemäße Herstellung eines Formkörpers aus einem wasserexpandierten Polymer-Harz gegeben:

100 g einer 20 %igen PMMA-Lösung in Methylmetacrylat (PMMA-Präpolymer mit einem Molekulargewicht von ca. 70 000) werden mit 3 g Trimethylpropantrimethacrylat als Vernetzer vermischt. Als Emulgatorkomponenten werden 0,75 g Hypermer B 246 und 1,5 g Hypermer 2296 zugegeben. Als Katalysator dient Dibenzoylperoxid, das in einer Menge von 3 g zugegeben wird.

In diese Mischung lassen sich bis zu 400 g Wasser in Form einer Emulsion einbringen. Vor Beginn des Gießprozesses wird Dimethylparatoluidin als Aktivator zugegeben.

Alternativ kann für den Gießprozeß eine Lösung hergestellt werden, die außer dem Aktivator sämtliche vorgenannten Komponenten in dem genannten Verhältnis enthält. Daneben kann ein weiterer Ansatz vorbereitet werden, der den Aktivator enthält, jedoch keinen Katalysatoranteil umfaßt.

Die beiden Ansätze können dann vor dem Gießen des Harzes zusammengemischt werden, wobei dann die Reaktion einsetzt, jedoch durch die Wasseranteile in der Emulsion die Temperatur nicht über ca. 46° C ansteigt. Diese milden Polymerisationsbedingungen ergeben ein Produkt, das zum einen sehr preisgünstig herzustellen ist, da nicht nur das relativ billige Acrylat als Ausgangsmaterial für die Harzkomponente verwendet werden kann, sondern diese Harzkomponente läßt sich durch den Einsatz bzw. in dem Volumen durch den Ersatz von Wasser weiter reduzieren.

Im folgenden sollen noch einige Beispiele angegeben werden, wie bei der Auswahl der richtigen Emulgatoren ein Viskositätsanstieg in der Mischung erzielt wird:

Bei einer Probe aus monomerem Methylmethacrylat, das den Emulgator, den Katalysator und den Vernetzer enthält, wird bei 20° C eine Viskosität von 3 mPas gemessen. Wird diesem System bei sonst unveränderter Zusammensetzung ein Wasseranteil von 66,3 % zugegeben, d.h. das Verhältnis von Wasser zu harzbildender Komponente beträgt jetzt 2:1, erhält man bei der Viskositätsmessung bei 20° C einen Anstieg der Viskosität auf 70 mPas. Wird der Wasseranteil in einem Verhältnis von 4:1 verwendet, erhält man einen Viskositätsanstieg auf 1 050 mPas.

Im Falle, daß eine harzbildende Komponente verwendet wird, bei der 10 Gew. % PMMA-Präpolymer vorhanden ist, erhält man bei der Mischung ohne Wasser eine Viskosität von 10 bis 11 mPas. Wird hier der Wasseranteil im Verhältnis 2:1 zur harzbildenden Komponente vorgelegt, so ergibt sich ebenfalls wieder bei 20° C eine Viskosität von 2 050 mPas, während im Falle, daß der Wasseranteil im Verhältnis 4:1 vorliegt, eine Viskosität von 29 800 mPas erhalten wird.

Es wird hieraus ersichtlich, daß zum einen über den Anteil des Wassers, zum andern aber ebenfalls in großem Umfang durch den Anteil des PMMA-Präpolymeren eine ausgezeichnete Möglichkeit gegeben ist, die Viskosität der aushärtbaren Masse für den Gießvorgang einzustellen.

Gleichzeitig wird über diesen einfachen Test eine sichere Auswahl aus der Vielzahl der möglichen Emulgatoren möglich.

## Patentansprüche

1. Verfahren zur Herstellung eines Kunststofformkörpers aus einem wasserexpandierten Polymerharz, wobei eine Mischung, welche einen mittels einer Emulgatorkomponente in einer harzbildenden Komponente emulgierten Wasseranteil umfaßt, ausgehärtet wird, dadurch gekennzeichnet, daß die harzbildende Komponente der aushärtbaren Mischung einen Monomer-Anteil und ein Acrylat-Präpolymer und gegebenenfalls einen Vernetzer auf Acrylat-Basis umfaßt und daß das Gewichtsverhältnis des Wasseranteils zur harzbildenden Komponente mindestens 1:1 beträgt, wobei das Präpolymer ein Molekulargewicht von ca. 40.000 bis 100.000 aufweist.

2. Verfahren nach Anspruch 1, dadurch gekennzeichnet, daß die aushärtbare Mischung einen anorganischen, partikelförmigen Füllstoff umfaßt.

3. Verfahren nach Anspruch 2, dadurch gekennzeichnet, daß die mittlere Korngröße des Füllstoffs 50 µm bis 20 000 µm beträgt.

4. Verfahren nach Anspruch 2 oder 3, dadurch gekennzeichnet, daß die Partikel des Füllstoffs zumindest partiell Hohlkörper sind.

5. Verfahren nach einem der Ansprüche 2 bis 4, dadurch gekennzeichnet, daß der partikelförmige Füllstoff Siliziumdioxide oder Aluminiumtrihydroxid umfaßt.

6. Verfahren nach einem der Ansprüche 1 bis 5, dadurch gekennzeichnet, daß der Monomer-Anteil Methacrylat, Methylmethacrylat, Butylacrylat, Acrylnitril und/oder Styrol umfaßt.

7. Verfahren nach einem der Ansprüche 1 bis 6, dadurch gekennzeichnet, daß der Vernetzer mindestens eine Komponente mit zwei Acrylat-Gruppen enthält.

8. Verfahren nach Anspruch 7, dadurch gekennzeichnet, daß der Vernetzer Triethylpropantrimethacrylat oder Ethylenglykoldimethacrylat umfaßt.

9. Verfahren nach Anspruch 7 oder 8, dadurch gekennzeichnet, daß der Vernetzer in der aushärtbaren Mischung mit einem Anteil von bis zu 10 Gew. % enthalten ist.

10. Verfahren nach einem der Ansprüche 1 bis 9, dadurch gekennzeichnet, daß das Acrylat-Präpolymer ein Molekulargewicht von ca. 70.000 aufweist.

11. Verfahren nach einem der Ansprüche 1 bis 10, dadurch gekennzeichnet, daß der Anteil des Acrylat-Präpolymeren an der harzbildenden Komponente 10 bis 30 Gew. % beträgt, vorzugsweise ca. 20 Gew. %.

12. Verfahren nach einem der Ansprüche 1 bis 4, dadurch gekennzeichnet, daß das Gewichtsverhältnis des Wasseranteils zur harzbildenden Komponente in der aushärtbaren Mischung ca. 2:1 bis ca. 6:1 beträgt.

13. Verfahren nach einem der Ansprüche 1 bis 12, dadurch gekennzeichnet, daß die Emulgatorkomponente so ausgewählt ist, daß der Wasseranteil in der aushärtbaren Mischung in feiner Tröpfchenform bei der Lagertemperatur und bei der Reaktionstemperatur stabil gehalten wird.

14. Verfahren nach Anspruch 13, dadurch gekennzeichnet, daß der Wasseranteil mit einem mittleren Tröpfchendurchmesser von maximal 50 µm vorhanden ist.

15. Verfahren nach Anspruch 14, dadurch gekennzeichnet, daß der Tröpfchendurchmesser ca. 10 bis 30 µm beträgt.

16. Verfahren nach einem der Ansprüche 13 bis 15, dadurch gekennzeichnet, daß die Emulgatorkomponente in der aushärtbaren Mischung mit einem vom Wassergehalt abhängigen Anteil von ca. 0,5 bis 6 Gew. % enthalten ist.

17. Verfahren nach einem der Ansprüche 13 bis 16, dadurch gekennzeichnet, daß die Emulgatorkomponente so formuliert ist, daß die Emulsion der aushärtbaren Mischung eine wesentlich höhere Viskosität aufweist als die harzbildende Komponente.

18. Verfahren nach einem der Ansprüche 13 bis 17, dadurch gekennzeichnet, daß die Emulgatorkomponente ein oder mehrere Polyoxyethylen-Blockcopolymere umfaßt.

19. Verfahren nach einem der Ansprüche 13 bis 18, dadurch gekennzeichnet, daß die Emulgatorkomponente Mischester aus Glycerin, Fettsäuren und Sorbitanen umfaßt.

20. Verfahren nach einem der Ansprüche 13 bis 19, dadurch gekennzeichnet, daß die Emulgatorkomponente Sulfonate umfaßt.

21. Verfahren nach einem der Ansprüche 1 bis 20, dadurch gekennzeichnet, daß die aushärtbare Mischung so ausgewählt ist, daß der Formkörper im wesentlichen geschlossene Poren nach der Aushärtereaktion und einem Trocknungsschritt aufweist.

22. Verfahren nach Anspruch 21, dadurch gekennzeichnet, daß die Porengröße im Mittel ≤ 30 µm beträgt.

23. Verfahren nach Anspruch 22, dadurch gekennzeichnet, daß die Porengröße im Mittel ca. 20 bis 30 µm beträgt.

24. Zwei- oder mehrschichtiger Formkörper mit einer Polymer-Deckschicht und einer Trägerschicht, welche als Formkörper nach einem Verfahren gemäß einem der Ansprüche 1 bis 23 ausgebildet ist.

25. Zwei- oder mehrschichtiger Formkörper nach Anspruch 24, dadurch gekennzeichnet, daß die Trägerschicht auf die Deckschicht aufgegossen ist.

26. Zwei- oder mehrschichtiger Formkörper nach Anspruch 24, dadurch gekennzeichnet, daß die Deckschicht auf die Trägerschicht aufgeklebt ist.

27. Zwei- oder mehrschichtiger Formkörper nach einem der Ansprüche 24 bis 26, dadurch gekennzeichnet, daß die Deckschicht einen anorganischen, partikelförmigen Füllstoff umfaßt.

28. Zwei- oder mehrschichtiger Formkörper nach Anspruch 27, dadurch gekennzeichnet, daß der anorganische Füllstoff eine mittlere Partikelgröße von 5 bis 50 µm aufweist.

29. Zwei- oder mehrschichtiger Formkörper nach einem der Ansprüche 24 bis 28, dadurch gekennzeichnet, daß die Deckschicht ca. 2 bis 10 mm dick ist.

30. Zwei- oder mehrschichtiger Formkörper nach einem der Ansprüche 24 bis 29, dadurch gekennzeichnet, daß die Dicke der Trägerschicht ca. 10 bis 60 mm beträgt.

31. Zwei- oder mehrschichtiger Formkörper nach einem der Ansprüche 24 bis 30, dadurch gekennzeichnet, daß zwischen der Deckschicht und der Trägerschicht eine faserverstärkte Schicht angeordnet ist.

32. Zwei- oder mehrschichtiger Formkörper nach einem der Ansprüche 24 bis 31, dadurch gekennzeichnet, daß die Deckschicht transluzent ist und daß unter der Deckschicht eine farbgebende Schicht angeordnet ist.

33. Zwei- oder mehrschichtiger Formkörper nach einem der Ansprüche 24 bis 32, dadurch gekennzeichnet, daß die Stirnseiten der Schichten von einer angegossenen Kunststoffleiste abgedeckt sind.

## Claims

1. A process for producing a plastic moulding from a water-expanded polymer resin, in which a mixture which comprises a water component, emulsified by means of an emulsifier component, in a resin-forming component is cured, characterized in that the resin-forming component of the curable mixture comprises a monomer component and an acrylate prepolymer and, optionally, a crosslinking agent having an acrylate base and in that the weight ratio of the water component to the resin-forming component is at least 1:1, the prepolymer having a molecular weight of approximately 40,000 to 100,000.

2. Process according to Claim 1, characterized in that the curable mixture comprises an inorganic particulate filler.

3. Process according to Claim 2, characterized in that the mean particle size of the filler is 50 µm to 20,000 µm.

4. Process according to Claim 2 or 3, characterized in that the particles of the filler are, at least partially, hollow bodies.

5. Process according to one of Claims 2 to 4, characterized in that the particulate filler comprises silicon dioxide or aluminium trihydroxide.

6. Process according to one of Claims 1 to 5, characterized in that the monomer component comprises methacrylate, methyl methacrylate, butyl acrylate, acrylonitrile and/or styrene.

7. Process according to one of Claims 1 to 6, characterized in that the crosslinking agent contains at least one component containing two acrylate groups.

8. Process according to Claim 7, characterized in that the crosslinking agent comprises triethylpropane trimethacrylate or ethylene glycol dimethacrylate.

9. Process according to Claim 7 or 8, characterized in that the curable mixture contains the crosslinking agent in a proportion of up to 10% by weight.

10. Process according to one of Claims 1 to 9, characterized in that the acrylate prepolymer has a molecular weight of approximately 70,000.

11. Process according to one of Claims 1 to 10, characterized in that the proportion of the acrylate prepolymer in the resin-forming component is 10 to 30% by weight, preferably approximately 20% by weight.

12. Process according to one of Claims 1 to 4, characterized in that the weight ratio of the water component to the resin-forming component in the curable mixture is approximately 2:1 to approximately 6:1.

13. Process according to one of Claims 1 to 12, characterized in that the emulsifier component is chosen so that the water component in the curable mixture is kept stable in fine droplet form at the storage temperature and at the reaction temperature.

14. Process according to Claim 13, characterized in that the water component is present with a mean droplet diameter of not more than 50 µm.

15. Process according to Claim 14, characterized in that the droplet diameter is approximately 10 to 30 µm.

16. Process according to one of Claims 13 to 15, characterized in that the curable mixture contains the emulsifier component in a proportion of approximately 0.5 to 6% by weight which depends on the water content.

17. Process according to one of Claims 13 to 16, characterized in that the emulsifier component is formulated so that the emulsion in the curable mixture has a substantially higher viscosity than the resin-forming component.

18. Process according to one of Claims 13 to 17, characterized in that the emulsifier component comprises one or more polyoxyethylene block copolymers.

19. Process according to one of Claims 13 to 18, characterized in that the emulsifier component comprises mixed esters of glycerol, fatty acids and sorbitans.

20. Process according to one of Claims 13 to 19, characterized in that the emulsifier component comprises sulphonates.

21. Process according to one of Claims 1 to 20, characterized in that the curable mixture is chosen so that the moulding has essentially closed pores after the curing reaction and a drying step.

22. Process according to Claim 21, characterized in that the pore size is on average less than or equal to 30 µm.

23. Process according to Claim 22, characterized in that the pore size is on average approximately 20 to 30 µm.

24. Two-layer or multilayer moulding having a polymer top layer and a base layer which is formed as a moulding by a process according to one of Claims 1 to 23.

25. Two-layer or multilayer moulding according to Claim 24, characterized in that the base layer is poured onto the top layer.

26. Two-layer or multilayer moulding according to Claim 24, characterized in that the top layer is bonded to the base layer.

27. Two-layer or multilayer moulding according to one of Claims 24 to 26, characterized in that the top layer comprises an inorganic particulate filler.

28. Two-layer or multilayer moulding according to Claim 27, characterized in that the inorganic filler has a mean particle size of 5 to 50 µm.

29. Two-layer or multilayer moulding according to one of Claims 24 to 28, characterized in that the top layer is approximately 2 to 10 mm thick.

30. Two-layer or multilayer moulding according to one of Claims 24 to 29, characterized in that the thickness of the base layer is approximately 10 to 60 mm.

31. Two-layer or multilayer moulding according to one of Claims 24 to 30, characterized in that a fibre-reinforced layer is disposed between the top layer and the base layer.

32. Two-layer or multilayer moulding according to one of Claims 24 to 31, characterized in that the top layer is translucent and in that a colouring layer is disposed underneath the top layer.

33. Two-layer or multilayer moulding according to one of Claims 24 to 32, characterized in that the end faces of the layers are covered by a cast-on plastic strip.

## Revendications

1. Procédé de fabrication d'un corps moulé en matière plastique à partir d'une résine polymère hydroexpansée, un mélange comportant une fraction d'eau émulsifiée au moyen d'un composant émulsifiant dans un composant résinifère étant durci, caractérisé en ce que le composant résinifère du mélange durcissable comprend une fraction de monomère et un prépolymère d'acrylate et le cas échéant un réticulant à base d'acrylate et en ce que le rapport pondéral de la fraction d'eau au composant résinifère est d'au moins 1:1, le prépolymère présentant une masse moléculaire d'environ 40 000 à 100 000.

2. Procédé selon la revendication 1, caractérisé en ce que le mélange durcissable comprend une charge particulaire inorganique.

3. Procédé selon la revendication 2, caractérisé en ce que la grosseur moyenne de grain de la charge est de l'ordre de 50 µm à 20 000 µm.

4. Procédé selon la revendication 2 ou 3, caractérisé en ce que les particules de la charge sont au moins partiellement des corps creux.

5. Procédé selon une des revendications 2 à 4, caractérisé en ce que la charge particulaire comprend des dioxydes de silicium ou du trihydroxyde d'aluminium.

6. Procédé selon une des revendications 1 à 5, caractérisé en ce que la fraction de monomère comprend du méthacrylate, du méthacrylate de méthyle, de l'acrylate de butyle, de l'acrylonitrile et/ou du styrène.

7. Procédé selon une des revendications 1 à 6, caractérisé en ce que le réticulant contient au moins un composant ayant deux groupements acrylate.

8. Procédé selon la revendication 7, caractérisé en ce que le réticulant comprend du propanetriméthacrylate de triéthyle ou du diméthacrylate d'éthylèneglycol.

9. Procédé selon la revendication 7 ou 8, caractérisé en ce que le réticulant est contenu dans le mélange durcissable en une proportion atteignant jusqu'à 10 % en poids.

10. Procédé selon une des revendications 1 à 9, caractérisé en ce que le prépolymère d'acrylate a une masse moléculaire d'environ 70 000.

11. Procédé selon une des revendications 1 à 10, caractérisé en ce que la fraction de prépolymère d'acrylate dans le composant résinifère est de l'ordre de 10 à 30 % en poids, de préférence d'environ 20 % en poids.

12. Procédé selon une des revendications 1 à 4, caractérisé en ce que le rapport pondéral de la fraction d'eau au composant résinifère dans le mélange durcissable est d'environ 2:1 à environ 6:1.

13. Procédé selon une des revendications 1 à 12, caractérisé en ce que le composant émulsifiant est choisi de façon que la fraction d'eau dans le mélange durcissable sous forme de fines gouttelettes soit stable à la température de stockage et à la température de réaction.

14. Procédé selon la revendication 13, caractérisé en ce que la fraction d'eau est présente pour un diamètre moyen de gouttelette de 50 µm au maximum.

15. Procédé selon la revendication 14, caractérisé en ce que le diamètre des gouttelettes est compris entre environ 10 et 30 µm.

16. Procédé selon une des revendications 13 à 15, caractérisé en ce que le composant émulsifiant est contenu dans le mélange durcissable en une proportion d'environ 0,5 à 6 % en poids, en fonction de la teneur en eau.

17. Procédé selon une des revendications 13 à 16, caractérisé en ce que le composant émulsifiant est formulé de telle sorte que l'émulsion du mélange durcissable présente une viscosité sensiblement supérieure à celle du composant résinifère.

18. Procédé selon une des revendications 13 à 17, caractérisé en ce que le composant émulsifiant comprend un ou plusieurs copolymères séquencés de polyoxyéthylène.

19. Procédé selon une des revendications 13 à 18, caractérisé en ce que le composant émulsifiant comprend des esters mixtes de glycérol, d'acides gras et de sorbitanes.

20. Procédé selon une des revendications 13 à 19, caractérisé en ce que le composant émulsifiant comprend des sulfonates.

21. Procédé selon une des revendications 1 à 20, caractérisé en ce que le mélange durcissable est choisi de façon que le corps moulé présente des pores sensiblement fermés après la réaction de durcissement et une étape de séchage.

22. Procédé selon la revendication 21, caractérisé en ce que la grosseur de pore est en moyenne ≤ 30 µm.

23. Procédé selon la revendication 22, caractérisé en ce que la grosseur de pore est en moyenne de l'ordre d'environ 20 à 30 µm.

24. Corps moulé bicouche ou multicouche comportant une couche de couverture polymère et une couche support formée en tant que corps moulé selon un procédé selon une des revendications 1 à 23.

25. Corps moulé bicouche ou multicouche selon la revendication 24, caractérisé en ce que la couche support est coulée sur la couche de couverture.

26. Corps moulé bicouche ou multicouche selon la revendication 24, caractérisé en ce que la couche de couverture est collée sur la couche support.

27. Corps moulé bicouche ou multicouche selon une des revendications 24 à 26, caractérisé en ce que la couche de couverture comprend une charge particulaire inorganique.

28. Corps moulé bicouche ou multicouche selon la revendication 27, caractérisé en ce que la charge inorganique a une grosseur moyenne de particule de 5 à 50 µm.

29. Corps bicouche ou multicouche selon une des revendications 24 à 28, caractérisé en ce que la couche de couverture a une épaisseur d'environ 2 à 10 mm.

30. Corps moulé bicouche ou multicouche selon une des revendications 24 à 29, caractérisé en ce que l'épaisseur de la couche support est d'environ 10 à 60 mm.

31. Corps moulé bicouche ou multicouche selon une des revendications 24 à 30, caractérisé en ce qu'une couche à renfort fibreux est disposée entre la couche de couverture et la couche support.

32. Corps moulé bicouche ou multicouche selon une des revendications 24 à 31, caractérisé en ce que la couche de couverture est translucide et en ce qu'une couche colorante est disposée sous la couche de couverture.

33. Corps moulé bicouche ou multicouche selon une des revendications 24 à 32, caractérisé en ce que les faces frontales des couches sont protégées par une baguette de matière plastique coulée.
